# EUROPEAN PATENT SPECIFICATION

(11) **EP 2 390 770 B1**
(45) Date of publication and mention of the grant of the patent: **06.06.2018**
(21) Application number: 11157261.6
(22) Date of filing: 08.03.2011
(51) Int. Cl.: G06F 3/044

(54) **Touch screen panel**
Berührungsbildschirmpaneel
Panneau d'écran tactile

(30) Priority: 12.03.2010 KR 20100022282
(43) Date of publication of application: 30.11.2011
(73) Proprietor: Samsung Display Co., Ltd., Gyeonggi-do (KR)
(72) Inventor: Ku, Ja-Seung, 446-711, Gyunggi-do (KR); Jang, Brent, 446-711, Gyunggi-do (KR); Kim, Do-Youb, 446-711, Gyunggi-do (KR); Ahn, Soon-Sung, 446-711, Gyunggi-do (KR)
(74) Representative: Gulde & Partner

(56) References cited:
- EP-A1- 2 209 064
- EP-A2- 2 096 526
- GB-A- 2 439 614
- US-A1- 2007 079 996
- US-A1- 2009 002 337
- US-A1- 2009 322 704

## Description

### BACKGROUND

### 1. Field

Embodiments relate to a touch screen panel.

### 2. Description of the Related Art

A touch screen panel is an input device that allows a user's instruction to be inputted by selecting an instruction content displayed on a screen, e.g., an image display device, with a user's hand or object.

To this end, the touch screen panel may be disposed on a front face of the image display device to convert a contact position into an electrical signal. Here, the user's hand or object may be directly in contact with the touch screen panel at the contact position. Accordingly, the instruction content selected at the contact position may be inputted as an input signal to the image display device.

Since such a touch screen panel may be substituted for a separate input device connected to an image display device, e.g., a keyboard or mouse, its application fields have been gradually extended.

Touch screen panels are divided into, e.g., a resistive overlay touch screen panel, a photosensitive touch screen panel, a capacitive touch screen panel, and the like.

The capacitive touch screen panel converts a contact position into an electrical signal by sensing a change in capacitance between a conductive sensing pattern and an adjacent sensing pattern, ground electrode, or the like when a user's hand or object is in contact with the touch screen panel.

To this end, the capacitive touch screen panel may include a plurality of first sensing patterns connected along a first direction and a plurality of second sensing patterns connected along a second direction, so that a coordinate of the contact position may be detected. Examples thereof are described in United States Patent Application 2009/0322704 A1 and in European Patent Application 2 096 526 A2.

### SUMMARY

Embodiments are directed to a touch screen panel which represents advances over the related art.

It is a feature of an embodiment to provide a touch screen panel having enhanced touch sensitivity.

At least one of the above and other features and advantages may be realized by providing a capacitive touch screen panel including a plurality of first sensing patterns connected along a long-side direction of a screen; and a plurality of second sensing patterns connected along a short-side direction of the screen, wherein an area of each of the first sensing patterns is smaller than an area of each of the second sensing patterns.

The first and second sensing patterns are patterned as a polygon with the same shape and size as one another as a basic form, and each of the first sensing patterns has a concave portion recessed inwardly on each side of the polygon.

Each of the second sensing patterns further has a projection portion protruded outwardly on each of the sides of the polygon. A base capacitance generated between another component of the display panel and the plurality of first sensing patterns connected along the long-side direction of the screen may be substantially identical to a base capacitance generated between the other component of the display panel and the plurality of the second sensing patterns connected along the short-side direction of the screen.

Each of the second sensing patterns may have a projection portion protruded outwardly on each of the sides of the polygon, and an area of the projection portion may correspond to an area of the concave portion of the first sensing patterns.

The first and second sensing patterns may have a rhombus as a basic form; each of the first sensing patterns may have a concave portion recessed inwardly on each side of the rhombus; and each of the second sensing patterns may have a projection portion protruded outwardly on each of the sides of the rhombus.

An area of the concave portion recessed inwardly on each of the first sensing patterns may be about equal to an area of the projection portion protruded outwardly on each of the second sensing patterns.

The concave portion may be a stepped concave portion having at least two different widths; and the projection portion may be a stepped projection portion having at least two different widths.

The first and second sensing patterns may be disposed on an upper substrate of a display panel for displaying images so as to be integrally implemented with the display panel.

### BRIEF DESCRIPTION OF THE DRAWINGS

The above and other features and advantages will become more apparent to those of ordinary skill in the art by describing in detail exemplary embodiments with reference to the attached drawings, in which:
FIG. 1 illustrates a plan view schematically showing a touch screen panel according to an embodiment;
FIGS. 2A to 2C illustrate plan views of first and second sensing patterns according to an embodiment; and
FIGS. 3A to 3C illustrate plan views of first and second sensing patterns according to another embodiment.

### DETAILED DESCRIPTION

Embodiments will now be described hereinafter with reference to the accompanying drawings.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

Also, when an element is referred to as being "connected to" another element, it can be directly connected to the other element or be indirectly connected to the other element with one or more intervening elements interposed therebetween.

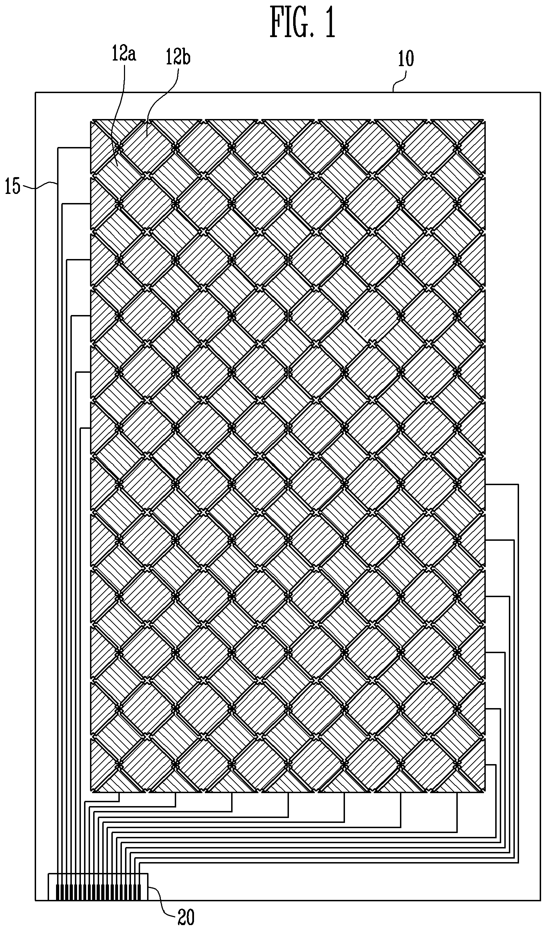

FIG. 1 illustrates a plan view schematically showing a touch screen panel according to an embodiment.

Referring to FIG. 1, the touch screen panel according to the present embodiment may be a capacitive touch screen panel. The touch screen panel may include a transparent substrate 10; a plurality of first and second sensing patterns 12a and 12b on the transparent substrate 10; and position detecting lines 15 for connecting the first and second sensing patterns 12a and 12b to an external drive circuit (not illustrated) through a pad portion 20.

The first sensing patterns 12a may be connected along a long-side direction of a screen and may be formed using a transparent electrode material, e.g., indium tin oxide (ITO). For example, when the long-side direction of the screen is a vertical direction, the first sensing patterns 12a may be connected along a column direction of the screen, so that the columns of the first sensing patterns 12a may be connected to the position detecting lines 15, respectively. On the other hand, when the long-side direction of the screen is a horizontal direction, the first sensing patterns 12a may be connected along a row direction of the screen. Hereinafter, it is assumed that the long-side direction of the screen is the column direction, for convenience of illustration and description.

The first sensing patterns 12a may be patterned to be connected along the column direction of the screen by a patterning process. Alternatively, the first sensing patterns 12a may have separated patterns from one another and the first sensing patterns 12a arranged in the same column may be connected by separate bridge patterns.

Like the first sensing patterns 12a, the second sensing patterns 12b may be formed using a transparent electrode material. The second sensing patterns 12b may be connected along the short-side direction of the screen. For example, the second sensing patterns 12b may be connected along a row direction of the screen, so that the rows of the second sensing patterns 12b may be connected to the position detecting lines 15, respectively.

The second sensing patterns 12b may also be patterned to be connected along the row direction of the screen by a patterning process. Alternatively, the second sensing patterns 12b may have separated patterns from one another; and the second sensing patterns 12b arranged in the same row may be connected by separate bridge patterns.

In an implementation, when the first sensing patterns 12a are connected along the column direction of the screen by the patterning process, the second sensing patterns 12b may have separated patterns and may be connected along the row direction by the bridge patterns. In an alternative implementation, when the first sensing patterns 12a have separated patterns along the column direction of the screen and are connected by bridge patterns, the second sensing patterns 12b may be connected along the row direction of the screen by the patterning process.

When the first and second sensing patterns 12a and 12b are positioned in different layers, they may all be patterned to be connected along the column and row directions by respective patterning processes.

As described above, the position detecting lines 15 may connect the first and second sensing patterns 12a and 12b to the external drive circuit, e.g., a position detecting circuit, through the pad portion 20.

The position detecting lines 15 may be disposed outside of an outline of the screen on which images are displayed, i.e., outside of a display area of the device. The position detecting lines 15 may have a wide range of selecting materials, and therefore, may be formed of a low-resistance material, e.g., molybdenum (Mo), silver (Ag), titanium (Ti), copper (Cu), aluminum (Al), and/or molybdenum/aluminum/molybdenum (Mo/Al/Mo), in addition to the transparent electrode material described above for forming the first and second sensing patterns 12a and 12b.

If a contact object, e.g., a user's hand or a touch stick, comes in contact with the aforementioned touch screen panel, a change in capacitance based on a contact position may be transferred from the sensing patterns 12a and 12b to the external drive circuit via the position detecting lines 15 and the pad portion 20. Then, the change in capacitance may be converted into an electrical signal by X and Y input processing circuits (not illustrated) and the like, so that the contact position may be detected.

The aforementioned touch screen panel may be disposed on an independent substrate to be attached to a front face of an image display device and the like, or may be integrally implemented with a display panel of the image display device.

For example, the touch screen panel may be formed on an upper substrate of an organic light emitting display panel or liquid crystal display panel so as to be integrally implemented with the display panel. As such, the touch screen panel may be integrally implemented with a display panel, thereby providing a thin image display device.

When the pattern shape and size of the first sensing patterns 12a are proportionally smaller than those of the second sensing patterns 12b, base capacitance in the long-side direction of the screen may be about the same as that in the short-direction of the screen, and therefore, touch sensitivity may be enhanced.

In particular, the base capacitance does not refer to touch capacitance used to implement the touch screen panel, but rather parasitic capacitance essentially generated in the structure of the touch screen panel. For example, the parasitic capacitance generated between the respective first and second sensing patterns 12a and 12b and another component at a side of the display panel positioned beneath the touch screen panel, e.g., a cathode electrode on a front face of the organic light emitting display panel or a common electrode on a front face of the liquid crystal display panel, may be a main factor.

The parasitic capacitance generated between the first and second sensing patterns 12a and 12b and signal lines grounded at the side of the display panel may also be an auxiliary factor.

The touch capacitance is the capacitance that implements the touch screen panel. In particular, the touch capacitance is the capacitance that is changed by a touch event in the occurrence of the touch event and which is used in position detection.

Thus, the touch sensitivity of the touch screen panel may be enhanced when the base capacitance is small and the touch capacitance is large. When the first sensing patterns 12a are connected along the long-side direction of the screen in a long line, the first sensing patterns 12a may be present in a number larger than that of the second sensing patterns 12b. Therefore, the base capacitance of the first sensing patterns 12a may be larger than that of the second sensing patterns 12b, while the touch capacitance of the first sensing patterns 12a may remain about equal to the touch capacitance of the second sensing patterns 12b. As a result, the touch sensitivity in the long-side direction of the screen may generally be low. Therefore, the entire touch sensitivity of the touch screen panel may also be lowered.

In an embodiment, the base capacitance, which, as described above, may be greater in the long-side directions of the screen, may be reduced by decreasing an area of each of the first sensing patterns 12a. In addition, in order to reduce a difference between the base capacitances in the long-side and short-side directions of the screen, an area of each of the second sensing patterns 12b may be increased.

That is, in order to reduce the difference between the base capacitances in the long-side and short-side directions of the screen, the pattern shapes of the first and second sensing patterns 12a and 12b may be changed such that the area of each of the first sensing patterns 12a may be smaller than the area of each of the second sensing patterns 12b. Thus, the touch sensitivity of the touch screen panel may be enhanced.

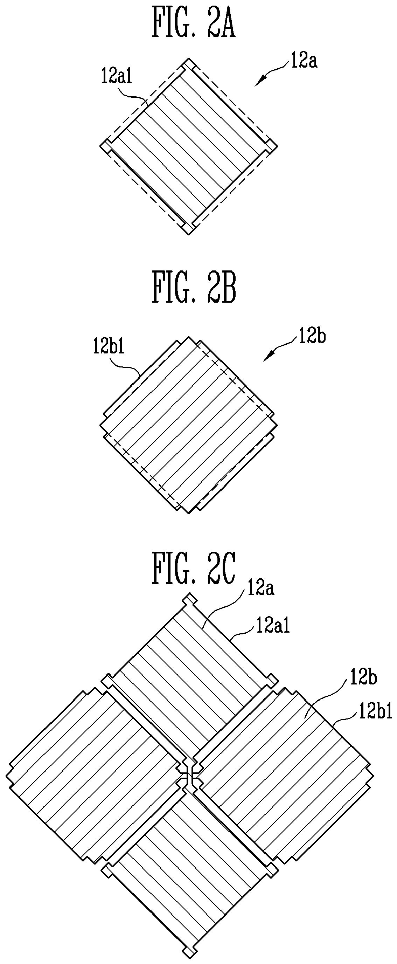

Examples of the pattern shapes of the first and second sensing patterns 12a and 12b will be described below with reference to FIGS. 2A to 3C.

FIGS. 2A to 2C illustrate plan views showing first and second sensing patterns according to an embodiment.

Referring to FIGS. 2A to 2C, each of the first and second sensing patterns 12a and 12b may be patterned using a polygon having the same shape and size as a basic form. As illustrated in FIG. 2A, the first sensing pattern 12a may be patterned to have a concave portion 12a1 recessed inward from each side of the polygon (i.e., concavely inward).

For example, each of the first and second sensing patterns 12a and 12b may be patterned using the same rhombus as a basic form (the dashed line illustrated in FIGS. 2A and 2B). The first sensing pattern 12a may be patterned to have a concave portion 12a1 recessed inward by a predetermined distance from each of the sides of the rhombus.

Accordingly, as the area of the first sensing pattern 12a is decreased, the base capacitance in each channel according to the long-side direction of the screen, i.e., a channel of each of the column lines, may be decreased, thereby enhancing the touch sensitivity. The distance at which the first sensing pattern 12a is recessed inward from each of the sides thereof may be experimentally determined such that the base capacitance may be decreased in a range that satisfies a predetermined touch capacitance desired in the touch screen panel.

The base capacitance in the long-side direction of the screen may be decreased by decreasing the area of the first sensing pattern 12a and the base capacitance in the short-side direction of the screen may be increased by increasing the area of the second sensing pattern 12b. Thus, the base capacitance in the long-side direction of the screen may be precisely matched to the base capacitance in the short-side directions of the screen. For example, the areas of the first and second sensing patterns 12a and 12b may be adjusted such that the base capacitance in the long-side direction of the screen is substantially identical to, i.e., about equal to, that in the short-side direction of the screen.

To this end, as illustrated in FIG. 2B, each of the second sensing patterns 12b may be patterned to have a projection portion 12b1 protruded outward from each side of a polygon, e.g., a rhombus.

As illustrated in FIG. 2C, the first and second sensing patterns 12a and 12b may be positioned close to each other. Thus, a region for increasing the area of the second sensing patterns 12b, i.e., the projection portion 12b1, may be as wide as the decreased area of the first sensing patterns 12a, i.e., the concave portion 12a1.

Therefore, the projection portion 12b1 of each of the second sensing patterns 12b may protrude outwardly and may correspond to the area of the concave portion 12a1 of each of the first sensing patterns 12a. That is, the area of the concave portion 12a1 recessed inwardly on each of the first sensing patterns 12a may be similar or substantially identical to, i.e., about equal to, the area of the projection portion 12b1 protruding outwardly on each of the second sensing patterns 12b.

However, the embodiments are not limited thereto. For example, the area of the projection portion 12b1 of each of the second sensing patterns 12b may be smaller than the area of the concave portion 12a1 of each of the first sensing patterns 12a so that the first and second sensing patterns 12a and 12b may be positioned closer to each other.

When the difference between base capacitances to be compensated for is large because of large difference between lengths of long and short sides of the screen, and the like, the area of the projection portion 12b1 of each of the second sensing patterns 12b may be larger than that of the concave portion 12a1 of each of the first sensing patterns 12a.

As described above, the pattern shapes of the first and second sensing patterns 12a and 12b may be changed such that the base capacitance in the long-side directions of the screen may be matched to that in the short-side directions of the screen.

In this case, the touch sensitivity in the long-direction of the screen may be similar or identical to, i.e., about equal to, that in the short-direction of the screen, thereby beneficially reducing errors in position detection and advantageously enhancing precision. Accordingly, the touch screen panel having enhanced touch sensitivity may be provided.

In a capacitive touch screen panel using a self-driving method of detecting occurrence of a touch event and the position of the touch event by applying voltage or current to each channel in the long-side and short-side directions of the screen and measuring current or voltage generated by the applied voltage or current, the base capacitance in the long-side directions of a screen may be matched to that in the short-side directions of the screen. Accordingly, errors in position detection may be reduced and the touch sensitivity of the touch screen panel may be enhanced.

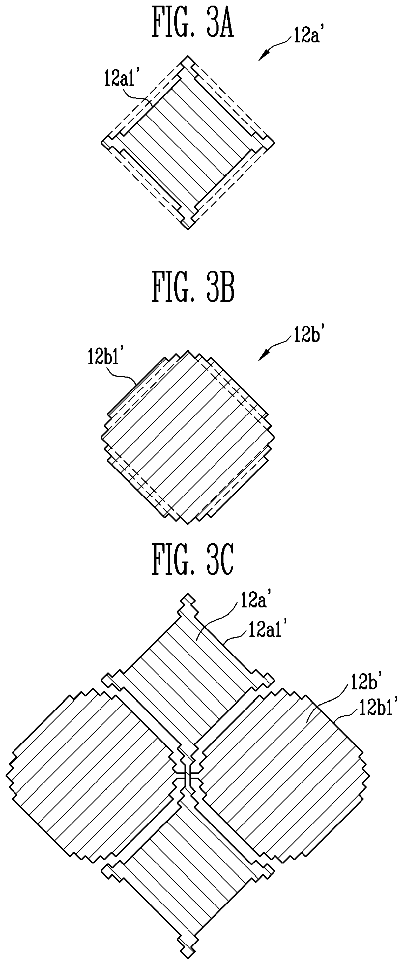

FIGS. 3A to 3C illustrate plan views showing first and second sensing patterns according to another embodiment. For convenience of illustration, in FIGS. 3A to 3C, repeated descriptions of portions identical to those of FIGS. 2A to 2C will be omitted.

Referring to FIGS. 3A to 3C, a first sensing pattern 12a' may be patterned to have a stepped concave portion 12a1' recessed inwardly on each side of a polygon basic shape. A second sensing pattern 12b' may be patterned to have a stepped projection portion 12b1' protruded outwardly on each side of the polygon basic shape. The vicinity of a vertex of the polygon connected to an adjacent first or second sensing pattern 12a' or 12b' may be designed to maintain its shape.

That is, the shapes and sizes of the first and second sensing patterns 12a, 12a', 12b, and 12b' according to the embodiments may be variously modified and implemented.

Although it has been illustrated in the aforementioned embodiments that the first and second sensing patterns 12a, 12a', 12b, and 12b' may be patterned using the polygon as a basic form, the present invention is not limited thereto.

For example, although not illustrated in these figures, the first and second sensing patterns may be patterned using a circle as a basic form. In this case, a diameter of each of the first sensing patterns connected along the long-side direction of the screen may be smaller than a diameter of each of the second sensing patterns connected along the short-side direction of the screen.

In an image display device, the horizontal and vertical lengths of a screen may be different from each other. Accordingly, the touch sensitivity in a first direction may be different from that in a second direction. In particular, in a long-side direction, a larger number of sensing patterns may be connected in a long line, as compared with a short-side direction. Therefore, base capacitance may be increased by parasitic capacitance between electrodes and signal lines at a lower side of a display panel. Accordingly, the touch sensitivity may be lowered.

However, as described above, according to the embodiments, the difference between the base capacitances in the long-side and short-side directions of the screen may be decreased by changing the pattern shapes of the sensing patterns, so that the touch screen panel having enhanced touch sensitivity may be provided.

## Claims

1. A capacitive touch screen panel, comprising:
a plurality of first sensing patterns (12a, 12a') connected along a long-side direction of a screen; and
a plurality of second sensing patterns (12b, 12b') connected along a short-side direction of the screen,
wherein an area of each of the first sensing patterns (12a, 12a') is smaller than an area of each of the second sensing patterns (12b, 12b'), **characterized in that**:
the first and second sensing patterns (12a, 12a', 12b, 12b') are patterned as a polygon with the same shape and size as one another as a basic form, and
each of the first sensing patterns (12a, 12a') has a concave portion (12a1, 12a1') recessed inwardly on each side of the polygon, wherein each of the second sensing patterns (12b, 12b') has a projection portion (12b1, 12b1') protruded outwardly on each of the sides of the polygon; and
wherein an area of each of the first sensing patterns (12a, 12a') and an area of each of the second sensing patterns (12b, 12b') is adapted to be such that a base capacitance generated between a cathode electrode or a common electrode of the display panel and the plurality of first sensing patterns (12a, 12a') connected along the long-side direction of the screen is equal to a base capacitance generated between the cathode electrode or a common electrode of the display panel and the plurality of the second sensing patterns (12b, 12b') connected along the short-side direction of the screen.

2. The touch screen panel as claimed in claim 1, wherein an area of the projection portion (12b1, 12b1') of the second sensing patterns (12b, 12b') corresponds to an area of the concave portion (12a1, 12a1') of the first sensing patterns (12a, 12a').

3. The touch screen panel as claimed in claim 1, wherein:
the first and second sensing patterns (12a, 12a', 12b, 12b') have a rhombus as a basic form;
each of the first sensing patterns (12a, 12a') has a concave portion (12a1, 12a1') recessed inwardly on each side of the rhombus; and
each of the second sensing patterns (12b, 12b') has a projection portion (12b1, 12b1') protruded outwardly on each of the sides of the rhombus.

4. The touch screen panel as claimed in claim 3, wherein an area of the concave portion (12a1, 12a1') recessed inwardly on each of the first sensing patterns (12a, 12a') is equal to an area of the projection portion (12b1, 12b1') protruded outwardly on each of the second sensing patterns (12b, 12b').

5. The touch screen panel as claimed in claim 3, wherein:
the concave portion (12a1') is a stepped concave portion having at least two different widths; and
the projection portion (12b1') is a stepped projection portion having at least two different widths.

6. The touch screen panel as claimed in one of the preceding claims, further comprising:
a transparent substrate (10) on which the first and second sensing patterns (12a, 12a', 12b, 12b') are disposed; and
position detecting lines (15) adapted to connect first and second sensing patterns (12a, 12a', 12b, 12b') to an external drive circuit.

7. A display panel for displaying images, comprising:
a touch screen panel as claimed in one of claims 1 through 6;
an upper substrate on which the touch screen panel is disposed so as to be integrally implemented with the display panel.

## Patentansprüche

1. Kapazitives Berührungsbildschirmpaneel, Folgendes umfassend:
mehrere erste Taststrukturen (12a, 12a'), welche entlang einer Richtung der langen Seite eines Bildschirms verbunden sind; und
mehrere zweite Taststrukturen (12b, 12b'), welche entlang einer Richtung der kurzen Seite des Bildschirms verbunden sind,
wobei eine Fläche jeder der ersten Taststrukturen (12a, 12a') kleiner ist als eine Fläche jeder der zweiten Taststrukturen (12b, 12b'), **dadurch gekennzeichnet, dass**:
die ersten und die zweiten Taststrukturen (12a, 12a', 12b, 12b') als ein Polygon mit der gleichen Form und Größe wie ein anderes als eine grundlegende Form strukturiert sind, und
jede der ersten Taststrukturen (12a, 12a') einen konkaven Abschnitt (12a1, 12a1') aufweist, welcher auf jeder Seite des Polygons einwärts vertieft ist, wobei jede der zweiten Taststrukturen (12b, 12b') einen Vorsprungabschnitt (12b1, 12b1') aufweist, welcher auf jeder der Seiten des Polygons auswärts vorsteht; und
wobei eine Fläche jeder der ersten Taststrukturen (12a, 12a') und eine Fläche jeder der zweiten Taststrukturen (12b, 12b') derartig eingerichtet sind, dass eine Basiskapazität, welche zwischen einer kathodischen Elektrode oder einer Masseelektrode des Anzeigepaneels und den mehreren ersten Taststrukturen (12a, 12a') erzeugt wird, welche entlang der Richtung der langen Seite des Bildschirms verbunden sind, gleich einer Basiskapazität ist, welche zwischen der kathodischen Elektrode oder einer Masseelektrode des Anzeigepaneels und den mehreren der zweiten Taststrukturen (12b, 12b') erzeugt wird, welche entlang der Richtung der kurzen Seite des Bildschirms verbunden sind.

2. Berührungsbildschirmpaneel nach Anspruch 1, wobei eine Fläche des Vorsprungabschnitts (12b1, 12b1') der zweiten Taststrukturen (12b, 12b') einer Fläche des konkaven Abschnitts (12a1, 12a1') der ersten Taststrukturen (12a, 12a') entspricht.

3. Berührungsbildschirmpaneel nach Anspruch 1, wobei:
die ersten und die zweiten Taststrukturen (12a, 12a', 12b, 12b') einen Rhombus als eine grundlegende Form aufweisen;
jede der ersten Taststrukturen (12a, 12a') einen konkaven Abschnitt (12a1, 12a1') aufweist, welcher auf jeder Seite des Rhombus einwärts vertieft ist; und
jede der zweiten Taststrukturen (12b, 12b') einen Vorsprungabschnitt (12b1, 12b1') aufweist, welcher auf jeder der Seiten des Rhombus auswärts vorsteht.

4. Berührungsbildschirmpaneel nach Anspruch 3, wobei eine Fläche des konkaven Abschnitts (12a1, 12a1'), welche auf jeder der ersten Taststrukturen (12a, 12a') einwärts vertieft ist, gleich einer Fläche des Vorsprungabschnitts (12b1, 12b1') ist, welcher auf jeder der zweiten Taststrukturen (12b, 12b') auswärts vorsteht.

5. Berührungsbildschirmpaneel nach Anspruch 3, wobei:
der konkave Abschnitt (12a1') ein gestufter konkaver Abschnitt mit mindestens zwei verschiedenen Breiten ist; und
der Vorsprungabschnitt (12b1') ein gestufter Vorsprungabschnitt mit mindestens zwei verschiedenen Breiten ist.

6. Berührungsbildschirmpaneel nach einem der vorhergehenden Ansprüche, weiterhin Folgendes umfassend:
ein durchsichtiges Substrat (10), auf welchem die ersten und zweiten Taststrukturen (12a, 12a', 12b, 12b') angeordnet sind; und
Positionsdetektionsleitungen (15), welche eingerichtet sind, um erste und zweite Taststrukturen (12a, 12a', 12b, 12b') mit einer externen Treiberschaltung zu verbinden.

7. Anzeigepaneel zum Anzeigen von Bildern, Folgendes umfassend:
ein Berührungsbildschirmpaneel nach einem der Ansprüche 1 bis 6;
ein oberes Substrat, auf welchem das Berührungsbildschirmpaneel angeordnet ist, um so integral mit dem Anzeigepaneel implementiert zu sein.

## Revendications

1. Panneau d'écran tactile capacitif, comprenant :
une pluralité de premiers motifs de détection (12a, 12a') reliés le long d'une direction du côté long d'un écran ; et
une pluralité de deuxièmes motifs de détection (12b, 12b') reliés le long d'une direction du côté court de l'écran,
dans lequel une zone de chacun des premiers motifs de détection (12a, 12a') est plus petite qu'une zone de chacun des deuxièmes motifs de détection (12b, 12b'), **caractérisé en ce que** :
les premier et deuxième motifs de détection (12a, 12a', 12b, 12b') sont modelés sous forme d'un polygone avec la même forme et la même taille en tant que forme de base, et
chacun des premiers motifs de détection (12a, 12a') a une partie concave (12a1, 12a1') en retrait vers l'intérieur sur chaque côté du polygone, où chacun des deuxièmes motifs de détection (12b, 12b') a une partie saillante (12b1, 12b1') faisant saillie vers l'extérieur sur chacun des côtés du polygone ; et
dans lequel une zone de chacun des premiers motifs de détection (12a, 12a') et une zone de chacun des deuxièmes motifs de détection (12b, 12b') sont adaptées de manière à ce qu'une capacité de base générée entre une électrode de cathode ou une électrode commune du panneau d'affichage et la pluralité de premiers motifs de détection (12a, 12a') reliés le long de la direction du côté long de l'écran soit égale à une capacité de base générée entre l'électrode de cathode ou une électrode commune du panneau d'affichage et la pluralité des deuxièmes motifs de détection (12b, 12b') reliés le long de la direction du côté court de l'écran.

2. Panneau d'écran tactile tel que revendiqué dans la revendication 1, dans lequel une zone de la partie saillante (12b1, 12b1') des deuxièmes motifs de détection (12b, 12b') correspond à une zone de la partie concave (12a1, 12a1') des premiers motifs de détection (12a, 12a').

3. Panneau d'écran tactile tel que revendiqué dans la revendication 1, dans lequel :
les premier et deuxième motifs de détection (12a, 12a', 12b, 12b') constituent un losange en tant que forme de base ;
chacun des premiers motifs de détection (12a, 12a') a une partie concave (12a1, 12a1') en retrait vers l'intérieur sur chaque côté du losange ; et
chacun des deuxièmes motifs de détection (12b, 12b') a une partie saillante (12b1, 12b1') faisant saillie vers l'extérieur sur chacun des côtés du losange.

4. Panneau à écran tactile tel que revendiqué dans la revendication 3, dans lequel une zone de la partie concave (12a1, 12a1') en retrait vers l'intérieur sur chacun des premiers motifs de détection (12a, 12a') est égale à une zone de la partie saillante (12b1, 12b1') faisant saillie vers l'extérieur sur chacun des deuxièmes motifs de détection (12b, 12b').

5. Panneau à écran tactile tel que revendiqué dans la revendication 3, dans lequel :
la partie concave (12a1') est une partie concave étagée ayant au moins deux largeurs différentes ; et
la partie saillante (12b1') est une partie saillante étagée ayant au moins deux largeurs différentes.

6. Panneau à écran tactile tel que revendiqué dans l'une des revendications précédentes, comprenant en outre :
un substrat transparent (10) sur lequel sont disposés les premier et deuxième motifs de détection (12a, 12a', 12b, 12b') ; et
des lignes de détection de position (15) adaptées pour relier des premier et deuxième motifs de détection (12a, 12a', 12b, 12b') à un circuit de commande externe.

7. Panneau d'affichage pour afficher des images, comprenant :
un panneau d'écran tactile tel que revendiqué dans l'une des revendications 1 à 6 ;
un substrat supérieur sur lequel le panneau d'écran tactile est disposé de manière à être créé d'un seul tenant avec le panneau d'affichage.
